# FASCICULE DE BREVET EUROPEEN

(11) **EP 1 200 889 B1**
(45) Date de publication et mention de la délivrance du brevet: **16.10.2002**
(21) Numéro de dépôt: 00951656.8
(22) Date de dépôt: 12.07.2000
(51) Int. Cl.: G06F 7/58

(54) **PROCEDE D'AMELIORATION D'UN GENERATEUR ALEATOIRE EN VUE DE LE RENDRE RESISTANT CONTRE LES ATTAQUES PAR MESURE DE COURANT**
VERFAHREN ZUR VERBESSERUNG EINES ZUFALLSGENERATORS HINSICHTLICH RESISTENZ GEGEN STROMVERBRAUCHMESSUNGSANFÄLLE
METHOD FOR IMPROVING A RANDOM NUMBER GENERATOR TO MAKE IT MORE RESISTANT AGAINST ATTACKS BY CURRENT MEASURING

(30) Priorité: 15.07.1999 FR 9909316
(43) Date de publication de la demande: 02.05.2002
(73) Titulaire: GEMPLUS, 13881 Gémenos Cédex (FR)
(72) Inventeur: CORON, Jean-Sébastien, F-75015 Paris (FR); NACCACHE, David, F-75009 Paris (FR)
(86) Numéro de dépôt international: FR0002009
(87) Numéro de publication internationale: WO01006350

(56) Documents cités:
- WO-A-97/20266
- FR-A- 2 672 402
- "DEA-BASED PSEUDORANDOM NUMBER GENERATOR" IBM TECHNICAL DISCLOSURE BULLETIN,US,IBM CORP. NEW YORK, vol. 35, no. 1B, 1 juin 1992 (1992-06-01), pages 431-434, XP000309126 ISSN: 0018-8689
- "INITIALIZATION PROCEDURE FOR DEA-BASED PSEUDORANDOM NUMBER GENERATOR" IBM TECHNICAL DISCLOSURE BULLETIN,US,IBM CORP. NEW YORK, vol. 35, no. 1B, 1 juin 1992 (1992-06-01), pages 351-353, XP000309094 ISSN: 0018-8689
- THE PGP ATTACK FAQ, PART 4, [en ligne] 26 janvier 1997 (1997-01-26), XP002137510 Extrait de l'Internet: <URL:http://www.stack.nl/~galactus/remaile rs/attack-4.html> [extrait le 2000-05-08]

## Description

L'invention concerne une amélioration d'un procédé de génération de nombres aléatoires ou source aléatoire, en particulier des sources mises au point dans le cadre de systèmes cryptographiques tels que les générateurs de nombres aléatoires embarqués à bord de cartes à puce.

Elle est particulièrement destinée à être mise en oeuvre dans le test et la validation de dispositifs électroniques du type carte à puce, PCMCIA, badges, cartes sans contact ou tout autre appareil portable.

La plupart des systèmes de cryptographie à clé publique (dite aussi cryptographie asymétrique) et clé secrète (dite aussi cryptographie symétrique) nécessitent le tirage d'aléas secrets. Il est primordial que de tels aléas, ou nombres, destinés à servir comme clés ultérieurement , soient à priori imprévisibles et ne présentent pas de régularités permettant de les retrouver par des stratégies de recherche exhaustive ou exhaustive améliorée pour laquelle les clés les plus probables sont cherchées en premier lieu.

Il est possible de construire une source aléatoire à partir d'une fonction dont il est difficile de calculer l'inverse. Soit f une telle fonction. Il est possible de construire une source aléatoire en commençant par sélectionner une variable d'initialisation aléatoire s et en appliquant la fonction f à la suite de valeurs s, s+1, s+2,...La sortie de la source aléatoire est définie comme f(s),f(s+1),f(s+2),...En fonction des propriétés de la fonction f utilisée, il peut être préférable de ne garder que quelques bits de la sortie f(s),f(s+1),f(s+2)...

Une méthode de génération de nombre aléatoire à partir d'une fonction dont il est difficile de calculer l'inverse est spécifiée dans le standard ANSI X9.17. La méthode utilise l'algorithme DES (pour Data Encryption Standard) avec une clé secrète K, qui ne doit être utilisée que dans le cadre de cet algorithme. Le procédé de génération de nombre aléatoire prend en entrée un entier aléatoire et secret s de taille 64 bits et un entier m, et renvoie en sortie m entiers aléatoires de 64 bits x₁, x₂,..., xₘ. Le procédé est caractérisé par les trois étapes suivantes :
1) Chiffrer avec l'algorithme DES utilisant la clef K une valeur D représentant une information de date et mettre le résultat dans la variable entière I.
2) Pour j allant de 1 à m exécuter les étapes suivantes :
   2)a) Remplacer s par s xor I.
   2)b) Mettre dans xⱼ le résultat du chiffrement de s avec l'algorithme DES utilisant la clef secrète K.
   2)c) Remplacer s par xⱼ xor I.
   2)d) Mettre dans s le résultat du chiffrement de s avec l'algorithme DES utilisant la clef secrète K.
3) Retourner en sortie la suite (x₁, x₂,..., xₘ).

Il est possible d'utiliser ce générateur aléatoire dans une application pour laquelle un générateur aléatoire est déjà disponible, mais de qualité jugée insuffisante, par exemple un générateur aléatoire embarqué dans le microprocesseur d'une carte à puce. Dans ce cas, le procédé décrit précédemment est utilisé pour améliorer la qualité du générateur aléatoire. Ce procédé prend en entrée un entier aléatoire et secret s de taille 64 bits et un entier m, et renvoie en sortie m entiers aléatoires de 64 bits x₁, x₂,..., xₘ. Le procédé utilise l'algorithme DES (pour Data Encryption Standard) avec une clé secrète K, qui ne doit être utilisée que dans le cadre de cet algorithme. Le procédé utilise une source S de qualité jugée insuffisante d'entiers aléatoires sur 64 bits. Le procédé est caractérisé par les 3 étapes suivantes :
1) Pour j allant de 1 à m faire
   1)a) Générer un entier I à l'aide de la source S.
   1)b) Remplacer s par s xor I.
   1)c) Mettre dans xⱼ le résultat du chiffrement de s avec l'algorithme DES utilisant la clef K.
   1)d) Générer un entier I à l'aide de la source S.
   1)e) Remplacer s par xⱼ xor I.
   1)f) Mettre dans s le résultat du chiffrement de s avec l'algorithme DES utilisant la clef K.
2) Retourner en sortie la suite (x₁, x₂,..., xₘ).

Il est apparu que l'implémentation sur carte à puce d'un algorithme de chiffrement à clé secrète (par exemple l'algorithme DES) était vulnérable à des attaques consistant en une analyse différentielle de consommation de courant permettant de retrouver la clé secrète. Ces attaques sont appelées attaques DPA, acronyme pour Differential Power Analysis. Le principe de ces attaques DPA repose sur le fait que la consommation en courant du microprocesseur exécutant des instructions varie selon la donnée manipulée. Pour retrouver la clef secrète, il est nécessaire que le message d'entrée ou le message de sortie de l'algorithme de chiffrement soient connus.

Les deux procédés de génération de nombre aléatoire décrits précédemment sont donc vulnérables à des attaques de type attaques DPA. En effet, les nombres aléatoires renvoyés en sortie par ces deux procédés sont les messages de sortie de l'algorithme de chiffrement. A partir de la consommation de courant de la carte à puce, il est donc possible de retrouver la clef K de chiffrement, et donc de prévoir ensuite la sortie du générateur aléatoire.

Le procédé de l'invention consiste en une modification des procédés de générations de nombre aléatoire décrits précédemment de façon à les rendre résistant contre des attaques de type DPA.

Le premier procédé modifié de générations de nombre aléatoire utilise l'algorithme DES (pour Data Encryption Standard) avec une clé secrète K, qui ne doit être utilisée que dans le cadre de cet algorithme. Il prend en entrée un entier aléatoire et secret s de taille 64 bits et un entier m, et renvoie en sortie m entiers aléatoires de 64 bits x₁, x₂,..., xₘ. Le procédé utilise une variable entière intermédiaire y. Le procédé est caractérisé par les trois étapes suivantes :
1) Chiffrer avec l'algorithme DES utilisant la clef k une valeur D représentant une information de date et mettre le résultat dans la variable entière I.
2) Pour j allant de 1 à m exécuter les étapes suivantes :
   2)a) Remplacer s par s xor I.
   2)b) Mettre dans la variable entière y le résultat du chiffrement de s avec l'algorithme DES utilisant la clef K.
   2)c) Mettre dans xⱼ le résultat de y xor s.
   2)d) Remplacer s par y xor I.
   2)e) Mettre dans s le résultat du chiffrement de s avec l'algorithme DES utilisant la clef K.
3) Retourner en sortie la suite (x₁, x₂,..., xₘ).
Dans ce procédé amélioré de génération de nombres aléatoires, une attaque par mesure de courant de type DPA est impossible car les messages d'entrée et de sortie de l'algorithme de chiffrement DES ne sont pas connus.

Le second procédé amélioré de génération de nombre aléatoire est utilisé pour augmenter la qualité d'un générateur aléatoire dont la qualité est jugée insuffisante. Ce procédé prend en entrée un entier aléatoire et secret s de taille 64 bits et un entier m, et renvoie en sortie m entiers aléatoires de 64 bits x₁, x₂,..., xₘ. Le procédé utilise l'algorithme DES (pour Data Encryption Standard) avec une clé secrète K, qui ne doit être utilisée que dans le cadre de cet algorithme. Le procédé utilise une source S de qualité jugée insuffisante d'entiers aléatoires sur 64 bits. Le procédé est caractérisé par les deux étapes suivantes :
1) Pour j allant de 1 à m faire
   1)a) Générer un entier I à l'aide de la source S.
   1)b) Remplacer s par s xor I.
   1)c) Mettre dans y le résultat du chiffrement de s avec l'algorithme DES utilisant la clef K.
   1)d) Mettre dans xᵢ le résultat de y xor s.
   1)e) Remplacer s par y xor I.
   1)f) Mettre dans s le résultat du chiffrement de s avec l'algorithme DES utilisant la clef K.
3) Retourner en sortie la suite (x₁, x₂,..., xₘ).

Dans ce procédé amélioré de génération de nombres aléatoires, une attaque par mesure de courant de type DPA est impossible car les messages d'entrée et de sortie de l'algorithme de chiffrement DES ne sont pas connus.

Les deux procédés de génération de nombre aléatoires précédemment décrits permettent donc d'obtenir un générateur de nombre aléatoire résistant contre les attaques par mesure de courant de type DPA.

## Revendications

1. Procédé de génération de nombre aléatoire utilisant l'algorithme DES avec une clé secrète K, ladite clef K ne devant être utilisée que dans le cadre de cet algorithme, ledit procédé prenant en entrée un entier aléatoire et secret s de taille 64 bits et un paramètre entier m, ledit procédé renvoyant en sortie m entiers aléatoires de 64 bits x₁, x₂,..., xₘ, **caractérisé en ce qu'**il comprend trois étapes :
1) Chiffrer avec l'algorithme DES utilisant la clef K une valeur D représentant une information de date et mettre le résultat dans une variable entière I ;
2) Pour j allant de 1 à m faire :
2)a) Remplacer s par s xor I ;
2)b) Mettre dans la variable entière y le résultat du chiffrement de s avec l'algorithme DES utilisant la clef K ;
2)c) Mettre dans xⱼ le résultat de y xor s;
2)d) Remplacer s par y xor I ;
2)e) Mettre dans s le résultat du chiffrement de s avec l'algorithme DES utilisant la clef k ;
3) Retourner en sortie la suite (x₁, x₂, ..., xₘ).

2. Procédé de génération de nombre aléatoire permettant d'améliorer la qualité d'un générateur aléatoire dont la qualité est jugée insuffisante, ledit procédé prenant en entrée un entier aléatoire et secret s de taille 64 bits et un entier m, ledit procédé renvoyant en sortie m entiers aléatoires de taille 64 bits x₁, x₂,..., xₘ, ledit procédé utilisant l'algorithme DES avec une clé secrète K, qui ne doit être utilisée que dans le cadre de cet algorithme, ledit procédé utilisant une variable intermédiaire entière y, ledit procédé utilisant une source S de qualité jugée insuffisante d'entiers aléatoires sur 64 bits x₁, x₂,..., xₘ,, **caractérisé en ce qu'**il comprend les deux étapes suivantes :
1) Pour j allant de 1 à m faire
1)a) Générer un entier I à l'aide de la source S ;
1)b) Remplacer s par s xor I ;
1)c) Mettre dans y le résultat du chiffrement de s avec l'algorithme DES utilisant la clef k ;
1)d) Mettre dans xᵢ le résultat de y xor s ;
1)e) Remplacer s par y xor I ;
1)f) Mettre dans s le résultat du chiffrement de s avec l'algorithme DES utilisant la clef K ;
2) Retourner en sortie la suite (x₁, x₂,..., xₘ).

3. Dispositif électronique mettant en oeuvre le procédé selon l'une quelconque des revendications 1 et 2 **caractérisé en ce que** le dispositif est un dispositif portable.

4. Dispositif électronique selon la revendication 3 **caractérisé en ce que** le dispositif est une carte à puce.

5. Dispositif électronique selon la revendication 3 **caractérisé en ce que** le dispositif est une carte sans contact.

6. Dispositif électronique selon la revendication 3 **caractérisé en ce que** le dispositif est une carte PCMCIA.

7. Dispositif électronique selon la revendication 3 **caractérisé en ce que** le dispositif est un badge.

8. Dispositif électronique selon la revendication 3 **caractérisé en ce que** le dispositif est une montre intelligente.

## Claims

1. A method of generating random numbers using the DES algorithm with a secret key K, the said key K having to be used only in the context of this algorithm, the said method taking as an input a random and secret integer s of size 64 bits and an integer parameter m, the said method returning as an output m random integers of 64 bits x₁, x₂, ..., xₘ, **characterised in that** it comprises three steps:
1) Enciphering with the DES algorithm using the key k a value D representing date information and putting the result in an integer variable I.
2) For j ranging from 1 to m:
2)a) Replacing s with s xor I;
2)b) Putting in the integer variable y the result of the enciphering of s with the DES algorithm using the key K;
2)c) Putting in xⱼ the result of y xor s;
2)d) Replacing s with y xor I;
2)e) Putting in s the result of the enciphering of s with the DES algorithm using the key k.
3) Returning as an output the series (x₁, x₂, ..., xₘ).

2. A method of generating random numbers for improving the quality of a random generator whose quality is deemed insufficient, the said method taking as an input a random and secret integer s of size 64 bits and an integer m, the said method returning as an output m random integers of size 64 bits x₁, x₂, ..., xₘ, the said method using the DES algorithm with a secret key K, which must be used only in the context of this algorithm, the said method using an intermediate integer variable y, the said method using a source S, of quality deemed insufficient, of random integers in 64 bits x₁, x₂, ..., xₘ, **characterised in that** it comprises the following two steps:
1) For j ranging from 1 to m
1)a) Generating an integer I using the source S;
1)b) Replacing s with s xor I;
1)c) Putting in y the result of the enciphering of s with the DES algorithm using the key K;
1)d) Putting in xᵢ the result of y xor s;
1)e) Replacing s with y xor I;
1)f) Putting in s the result of the enciphering of s with the DES algorithm using the key K.
2) Returning as an output the series (x₁, x₂, ..., xₘ).

3. An electronic device implementing the method according to either one of Claims 1 and 2, **characterised in that** the device is a portable device.

4. An electronic device according to Claim 3, **characterised in that** the device is a chip card.

5. An electronic device according to Claim 3, **characterised in** the device is a contactless card.

6. An electronic device according to Claim 3, **characterised in** the device is a PCMCIA card.

7. An electronic device according to Claim 3, **characterised in** the device is a badge.

8. An electronic device according to Claim 3, **characterised in** the device is an intelligent watch.

## Patentansprüche

1. Generationsverfahren von Zufallszahlen, das den Algorithmus DES mit einem Geheimschlüssel K benutzt, wobei der besagte Schlüssel nur im Rahmen dieses Algorithmus verwendet werden darf, wobei das besagte Verfahren am Eingang eine zufällige und geheime Ganzzahl s mit einer Größe von 64 Bit und einen ganzen Parameter m nimmt, wobei das besagte Verfahren am Ausgang m zufällige Ganzzahlen von 64 Bit x₁, x₂, ..., xₘ zurücksendet, **dadurch gekennzeichnet, dass** es aus drei Etappen besteht:
1) Mit dem den Schlüssel K benutzenden Algorithmus DES einen Wert D chiffrieren, der eine Dateninformation darstellt, und das Ergebnis in eine ganze Variable I einfügen.
2) Für j, der von 1 bis m geht, die folgenden Etappen ausführen:
2) a) s durch s xor I ersetzen.
2) b) Das Ergebnis der Chiffrierung von s mit dem den Schlüssel K benutzenden Algorithmus DES in die ganze Variable y einfügen.
2) c) Das Ergebnis von y xor s in xⱼ einfügen.
2) d) s durch y xor I ersetzen.
2) e) Das Ergebnis der Chiffrierung von s mit dem den Schlüssel K benutzenden Algorithmus DES in s einfügen.
3) Am Ausgang die Folge (x₁, x₂, ..., xₘ) zurücksenden.

2. Generationsverfahren von Zufallszahlen, das es ermöglicht, die Qualität eines Zufallsgenerators zu verbessern, dessen Qualität als unzureichend betrachtet wird, wobei dieses Verfahren am Eingang eine zufällige und geheime Ganzzahl s mit einer Größe von 64 Bit und eine Ganzzahl m nimmt, wobei das besagte Verfahren am Ausgang m zufällige Ganzzahlen von 64 Bit x₁, x₂, ..., xₘ zurücksendet, wobei das besagte Verfahren den Algorithmus DES mit einem Geheimschlüssel K benutzt, der nur im Rahmen dieses Algorithmus verwendet werden darf, wobei das besagte Verfahren eine ganze Zwischenvariable y benutzt, wobei das besagte Verfahren eine Quelle S, deren Qualität als unzureichend betrachtet wird, von zufälligen Ganzzahlen über 64 Bit x₁, x₂, ..., xₘ benutzt, **dadurch gekennzeichnet, dass** es die beiden folgenden Etappen umfasst:
1) Für j, der von 1 bis m geht, wie folgt verfahren
1) a) Mit der Quelle S eine Ganzzahl I erzeugen.
1) b) s durch s xor I ersetzen.
1) c) Das Ergebnis der Chiffrierung von s mit dem den Schlüssel K benutzenden Algorithmus DES in y einfügen.
1) d) Das Ergebnis von y xor s in xᵢ einfügen.
1) e) s durch y xor I ersetzen.
1) f) Das Ergebnis der Chiffrierung von s mit dem den Schlüssel K benutzenden Algorithmus DES in s einfügen.
2) Am Ausgang die Folge (x₁, x₂, ..., Xₘ) zurücksenden.

3. Elektronische Vorrichtung für die Umsetzung des Verfahrens nach einem der Ansprüche 1 und 2, **dadurch gekennzeichnet, dass** es sich um eine tragbare Vorrichtung handelt.

4. Elektronische Vorrichtung nach Anspruch 3, **dadurch gekennzeichnet, dass** es sich um eine Chipkarte handelt.

5. Elektronische Vorrichtung nach Anspruch 3, **dadurch gekennzeichnet, dass** es sich um eine kontaktlose Karte handelt.

6. Elektronische Vorrichtung nach Anspruch 3, **dadurch gekennzeichnet, dass** es sich um eine PCMCIA-Karte handelt.

7. Elektronische Vorrichtung nach Anspruch 3, **dadurch gekennzeichnet, dass** es sich um einen Badge handelt.

8. Elektronische Vorrichtung nach Anspruch 3, **dadurch gekennzeichnet, dass** es sich um eine intelligente Uhr handelt.
